# EUROPEAN PATENT APPLICATION

(11) **EP 2 104 040 A2**
(43) Date of publication of application: **23.09.2009**
(21) Application number: 08018002.9
(22) Date of filing: 14.10.2008
(51) Int. Cl.: G06F 11/07

(54) **Method and apparatus for verifying archived data integrity in integrated storage systems**

(30) Priority: 20.03.2008 US 52695
(71) Applicant: Hitachi Ltd., Chiyoda-ku Tokyo (JP)
(72) Inventor: Mimatsu, Yasuyuki, Chiyoda-ku Tokyo 100-8220 (JP)
(74) Representative: Kirschner, Klaus Dieter

(57) **Abstract**

A system and method for detecting alteration or corruption of data archived in integrated storage system including an archive storage coupled to external storage devices. Before a data object is sent from the archive storage to the external devices, the archive storage generates data integrity information for each object. The data integrity information may be a hash value that is recorded in memory of the archive storage or a digital signature that is sent to the external device together with the object. When an object is requested by a client computer, the archive storage checks the data integrity information before the object is sent to the client. If an integrity violation is detected, both the client computer and an administrator at a management server are notified. The integrity information is updated if a hash algorithm is updated or certificate corresponding to a key used to generate the digital signatures has expired.

## Description

This invention is related generally to managing data in computer storage systems and, more particularly, to verifying integrity of data stored in storage devices.

One important feature of archive storage systems is providing a guarantee of integrity of archived data. For example, Write-Once-Read-Many (WORM) storage capability of archive storage systems prevents unexpected alteration of data until a specified retention period has expired.

Some disk-based archive storage systems check the integrity of the data internally to detect data corruption due to deterioration of storage media or signal noise on the data path by verifying cryptographic hash value of the data or a digital signature. The above characteristics make the disk-based archive storage systems an excellent solution for preserving data for a long time.

However, disk-based archive storage systems including advanced functions are often more expensive than simpler Network-Attached Storage (NAS) systems, traditional optical disk systems, or tape-based archive systems.

To reduce cost of preserving massive quantities of data for a long time, disk-based archive storage systems are used together with other and more inexpensive storage systems in an integrated storage system. For example, archived data which is actively accessed by users is stored in archive storage systems that strictly protect the data because this type of data must be retrieved rapidly and the loss of this type of data affects the user's activity to a greater extent. On the other hand, data that is rarely accessed by the user may be stored on NAS, optical disks or tape systems.

In the integrated storage system, archived data is stored on disk-based archive storage systems at first and sent to other storage systems after it has been inactive. The archive storage system can guarantee the integrity of archived data. However, if the archived data is sent to a storage system with no function for guaranteeing data integrity, the data may be altered or corrupted while it is being retained in the storage system. Even if the data migrates to another archive storage system which internally guarantees data integrity, the data may be altered along the data path. In either case, the user cannot detect the alteration or corruption of data.

The inventive methodology is directed to methods and systems that substantially obviate one or more of the above and other problems associated with conventional techniques for verifying data integrity.

Aspects of the present invention provide a method and an apparatus for detecting alteration or corruption of data archived in integrated storage systems that include an archive storage system which provides a function to guarantee data integrity and another storage system which does not provide such a function.

According to a main aspect of the invention, a system for managing and verifying integrity of a data object comprises an archive storage system comprising a first interface operable to connect the archive storage system with a client computer, the archive storage system comprising an internal storage and a processor, the archive storage system operable to receive the data object from the client computer, to store, at least intermittently, the received data object in the internal storage and to generate and cause to be recorded a first integrity measure for the data object; and an external storage system operatively coupled to the archive storage system; wherein the archive storage is operable to migrate the data object to the external storage system upon an occurrence of a predetermined condition; to generate, upon reading of the data object by the client computer, a second integrity measure for the data object; to verify the integrity of the data object using the stored first integrity measure and the second integrity measure; and to notify the client computer if it is determined that the integrity of the data object has been compromised.

According to a preferred aspect of the invention, the first integrity measure and the second integrity measure are cryptographic hash values of the data object.

According to a preferred aspect of the invention, the archive storage system is operable to prevent modification of the data object.

According to a preferred aspect of the invention, the archive storage system further comprises a clock for providing a time information, wherein the occurrence of the predetermined condition is determined based on the time information.

According to a preferred aspect of the invention, the verification indicator is a verification flag indicating whether the integrity verification is conducted when the data object is read from the external storage system by the archive storage system, wherein at least one of the first integrity measure and the second integrity measure comprises a hash value of the data object, and wherein the object table further includes a name of a hash algorithm corresponding to the hash value of the data object..

According to a preferred aspect of the invention, the archive storage system further stores a root certificate comprising an authority key, wherein the archive storage system is operable to verify validity of the storage certificate by decrypting the storage certificate with the authority key.

According to a main aspect of the invention, a method for managing a data object stored in a storage system comprising an archive storage system including a first interface operable to connect the archive storage system with a client computer and an external storage system operatively coupled to the archive storage system, where the method comprises generating and storing, upon receipt of the data object by the storage system from the client computer, a first integrity measure for the data object; migrating the data object to the external storage system upon an occurrence of a predetermined condition; generating, upon reading of the data object by the client computer, a second integrity measure for the data object; verifying the integrity of the data object using the stored first integrity measure and the second integrity measure; and notifying the client computer if it is determined that the integrity of the data object has been compromised.

According to a preferred aspect of the invention, the method further comprises receiving a read request from a client computer for reading the data object; and providing the data object to the client computer when the integrity of the data object has been successfully verified.

According to a preferred aspect of the invention, the first integrity measure is a first cryptographic hash value and the second integrity measure is a second cryptographic hash value.

According to a preferred aspect of the invention, the method further comprises receiving a hash update request, the hash update request identifying a new hash algorithm; if the first hash value is not identical to the second hash value, sending an integrity violation error to the management server; and if the second hash value is identical to the first hash value, then calculating a new hash value for the data object using the new hash algorithm, storing the new hash value on the archive storage as the first hash value, and storing the new hash algorithm on the archive storage as the hash algorithm.

According to a preferred aspect of the invention, the method further comprises preventing modification of the data object.

According to a preferred aspect of the invention, the method further comprises causing at least one of the first integrity measure and the second integrity measure to be updated.

According to a preferred aspect of the invention, verifying the integrity of the data object comprises using a root certificate to verify validity of the storage certificate.

According to a preferred aspect of the invention, the method further comprises a signature update process comprising determining if the storage certificate has expired by examining the expiration time of the storage certificate; verifying the integrity of the data object; and if the integrity of the data object has been verified, then calculating a new hash value for the data object; encrypting the new hash value to obtain a signed new data object hash value; recording a new expiration time of a new storage certificate on the archive storage; and writing the data object to the external device together with the signed new data object hash value and the new storage certificate.

According to a main aspect of the invention, a computer readable medium storing a set of instructions, which, when executed by one or more processors, cause the one or more processors to perform a method for managing a data object stored in a storage system comprising an archive storage system including a first interface operable to connect the archive storage system with a client computer and an external storage system operatively coupled to the archive storage system, where the method comprises generating and storing, upon receipt of the data object by the storage system from the client computer, a first integrity measure for the data object; migrating the data object to the external storage system upon an occurrence of a predetermined condition; generating, upon reading of the data object by the client computer, a second integrity measure for the data object; verifying the integrity of the data object using the stored first integrity measure and the second integrity measure; and notifying the client computer if it is determined that the integrity of the data object has been compromised.

In accordance with one aspect of the inventive concept there is provided a computerized system for managing and verifying integrity of a data object. The inventive system includes an archive storage system including a first interface configured to connect the archive storage system with a client computer. The archive storage system also includes an internal storage and a processor. The archive storage system is configured to receive the data object from the client computer, to store, at least intermittently, the received data object in the internal storage and to generate and cause to be recorded a first integrity measure for the data object. The inventive system further includes an external storage system coupled to the archive storage system. The archive storage is configured to: migrate the data object to the external storage system upon an occurrence of a predetermined condition; generate, upon reading of the data object by the client computer, a second integrity measure for the data object; verify the integrity of the data object using the stored first integrity measure and the second integrity measure; and notify the client computer if it is determined that the integrity of the data object has been compromised.

In accordance with another aspect of the inventive concept there is provided a method for managing a data object stored in a storage system including an archive storage system including a first interface configured to connect the archive storage system with a client computer and an external storage system coupled to the archive storage system. The inventive method involves: generating and storing, upon receipt of the data object by the storage system from the client computer, a first integrity measure for the data object; migrating the data object to the external storage system upon an occurrence of a predetermined condition; generating, upon reading of the data object by the client computer, a second integrity measure for the data object; verifying the integrity of the data object using the stored first integrity measure and the second integrity measure; and_notifying the client computer if it is determined that the integrity of the data object has been compromised.

In accordance with yet another aspect of the inventive concept there is provided a computer readable medium storing a set of instructions, which, when executed by one or more processors, cause the one or more processors to perform a method for managing a data object stored in a storage system including an archive storage system including a first interface configured to connect the archive storage system with a client computer and an external storage system coupled to the archive storage system. The performed method involves: generating and storing, upon receipt of the data object by the storage system from the client computer, a first integrity measure for the data object; migrating the data object to the external storage system upon an occurrence of a predetermined condition; generating, upon reading of the data object by the client computer, a second integrity measure for the data object; verifying the integrity of the data object using the stored first integrity measure and the second integrity measure; and notifying the client computer if it is determined that the integrity of the data object has been compromised.

Additional aspects related to the invention will be set forth in part in the description which follows, and in part will be obvious from the description, or may be learned by practice of the invention. Aspects of the invention may be realized and attained by means of the elements and combinations of various elements and aspects particularly pointed out in the following detailed description and the appended claims.

Most preferred embodiments of the invention are characterized in the sub-claims.

It is to be understood that both the foregoing and the following descriptions are exemplary and explanatory only and are not intended to limit the claimed invention or application thereof in any manner whatsoever.

The accompanying drawings, which are incorporated in and constitute a part of this specification exemplify the embodiments of the present invention and, together with the description, serve to explain and illustrate principles of the inventive technique. Specifically:

Figure 1 shows an exemplary integrated archive storage system according to aspects of the invention.

Figure 2 shows one exemplary verification table.

Figure 3 shows an exemplary migration table.

Figure 4A shows an exemplary data integrity evaluation method according to the first aspect of the invention.

Figure 4B shows an exemplary data integrity evaluation method according to the second aspect of the invention.

Figure 5 shows an exemplary object table.

Figure 6 shows methods carried out by a management program of a management server, according to the first aspect of the invention.

Figure 7 shows a method employed by a control program of an archive storage, according to the first aspect of the invention.

Figure 8 shows an exemplary method of processing a write request, according to the first aspect of the invention.

Figure 9 shows an exemplary method for background object migration, according to the first aspect of the invention.

Figure 10 shows an exemplary method of processing a read request, according to the first aspect of the invention.

Figure 11 shows a method of hash update according the first aspect of the invention.

Figure 12 shows an exemplary archive storage according to a second aspect of the invention.

Figure 13 shows an exemplary archive storage according to a first aspect of the invention as a reminder.

Figure 14 shows an exemplary verification table.

Figure 15 shows an exemplary object table.

Figure 16 shows methods carried out by a management program, according to the second aspect of the invention.

Figure 17 shows a method employed by a control program of an archive storage, according to the second aspect of the invention.

Figure 18 shows an exemplary method of processing a write request, according to the second aspect of the invention.

Figure 19 shows an exemplary method for background object migration, according to the second aspect of the invention.

Figure 20 shows an exemplary method of processing a read request, according to the second aspect of the invention.

Figure 21 shows a process of signature verification according to the second aspect of the invention.

Figure 22 shows a method of signature update according to the second aspect of the invention.

Figure 23 illustrates an exemplary embodiment of a computer platform upon which the inventive system may be implemented.

In the following detailed description, reference will be made to the accompanying drawings, in which identical functional elements are designated with like numerals. The aforementioned accompanying drawings show by way of illustration, and not by way of limitation, specific embodiments and implementations consistent with principles of the present invention. These implementations are described in sufficient detail to enable those skilled in the art to practice the invention and it is to be understood that other implementations may be utilized and that structural changes and/or substitutions of various elements may be made without departing from the scope and spirit of present invention. The following detailed description is, therefore, not to be construed in a limited sense. Additionally, the various embodiments of the invention as described may be implemented in the form of a software running on a general purpose computer, in the form of a specialized hardware, or combination of software and hardware.

Aspects of the present invention provide a method and an apparatus for evaluating data integrity of the data in archived data objects and detecting alteration or corruption of data archived in integrated storage systems. The integrated storage systems include an archive storage system which provides a function to guarantee data integrity and another storage system which does not provide such a function.

According to aspects of the present invention, before archived data migrates from a disk-based archive system to another storage system, the disk-based archive storage system generates data integrity information like cryptographic hash value or digital signature and records it for the migrating data. When the migrated data is requested by users, the disk-based archive storage system reads the data and checks data integrity before the data is sent to the users. If an integrity violation is detected, the storage system reports it and prevents users from accessing altered or corrupted data. In addition, the disk-based storage system updates the integrity information in certain situations, for example, if a cryptographic hash algorithm or a certificate used to generate the digital signatures is updated.

In aspects of the present invention, a disk-based archive storage provides archive storage capacity to client computers. External storage devices, such as a NAS, an optical disk system and a tape system, may be coupled to the archive storage to form an integrated storage system.

In one aspect of the present invention, the disk-based archive storage provides WORM storage to data objects. A cryptographic hash value for each archived object is recorded in the archive storage when the object is created. If an object is read by a client computer after it has migrated to an external device, the archive storage calculates a hash value for the object and compares this calculated hash value with the recorded hash value to verify the integrity of the object. In this aspect of the invention, integrity verification information for each object is stored internally in the archive storage itself.

In another aspect of the present invention, a hash value for each archived object is digitally signed and stored in the external storage devices together with the archived object and a certificate of signature when the object is sent to the external storage device. If an object is read by a client computer after it has migrated to an external storage device, the archive storage system checks the validity of the certificate, calculates a hash value for the object, and compares the calculated hash value with the hash value stored in the certificate to verify the integrity of the object. In this aspect of the invention, integrity verification information for each object is stored together with the object in the external storage device.

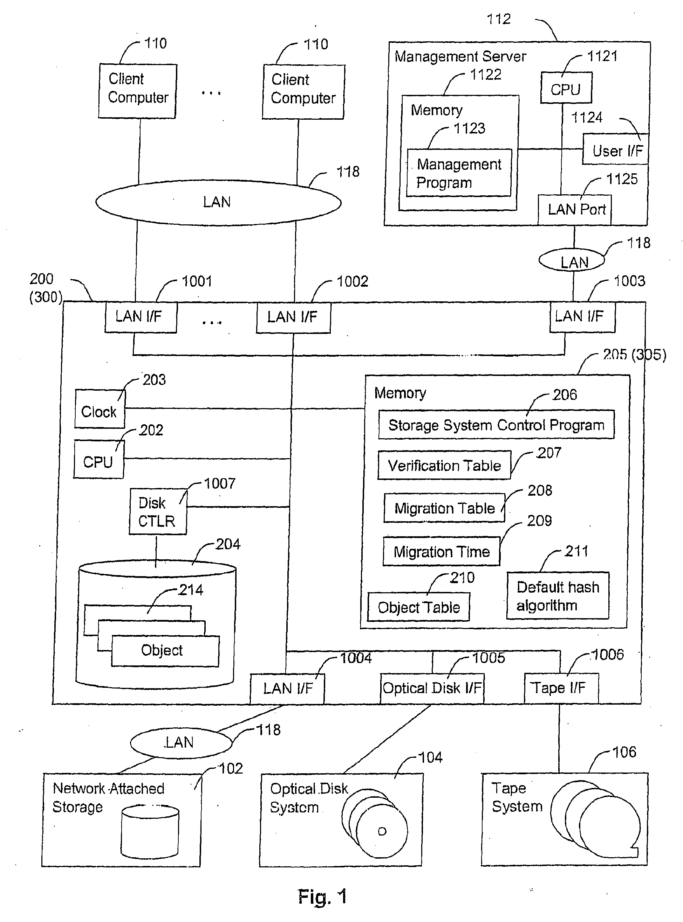

Figure 1 shows an exemplary integrated archive storage system according to aspects of the invention.

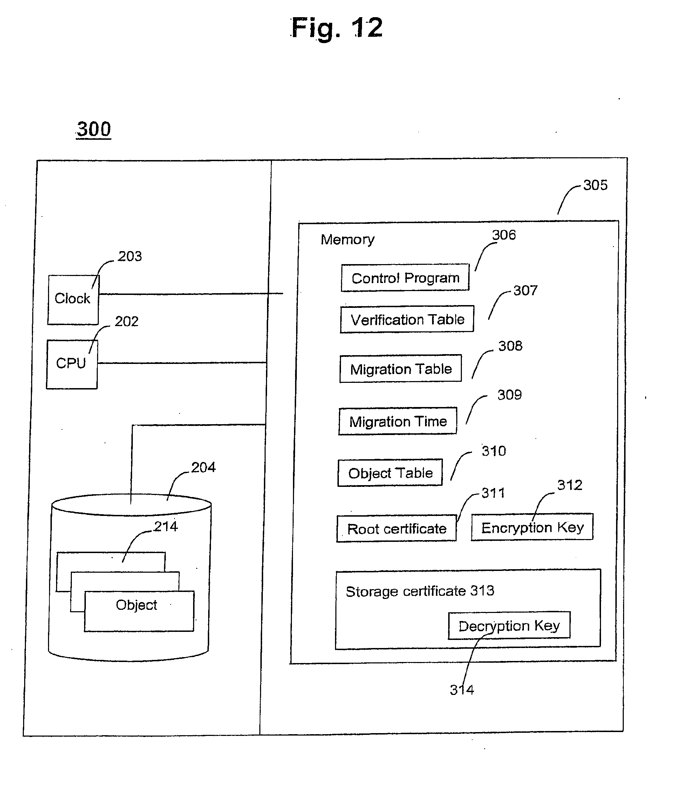

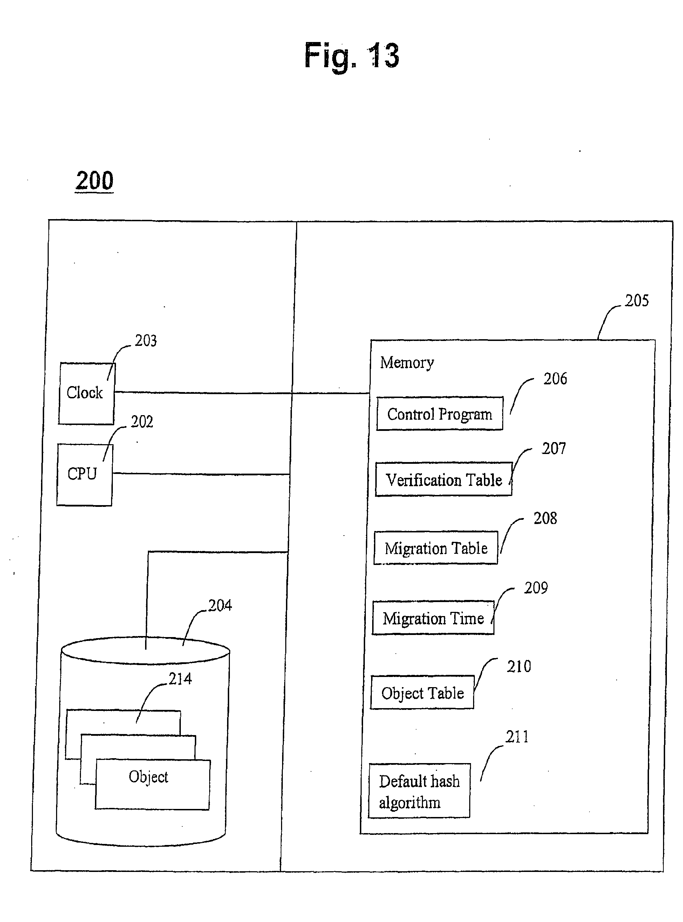

This drawing may be used to represent one aspects of invention including an archive storage 200 including a memory 205 (shown again in Figure 13) or a second aspect of the invention including an archive storage 300 including a memory 305 that is shown in Figure 12.

The integrated archive storage system includes an archive storage 200, 300 that is coupled to external storage devices 102, 104, 106 that may include one or more of a NAS, an optical disk system, or a tape system and other similar external storage devices. A network 118, that may be a local area network (LAN), couples the archive storage 200, 300 to the external storage devices 102, 104, 106. The archive storage 200, 300 may be coupled to one or more client computers 110 and a management server 112.

The elements used for coupling the components include the LAN ports 1125, the LAN interfaces 1001, 1002, 1003, and the external device interfaces 1004, 1005, 1006 that may be used to connect the components together. Other types of networks or cables may be used to connect the various components of the integrated storage system together and to the client computers or the management server. The ports and interfaces used would be accordingly modified.

The management server 112 is used by an administrator for managing the archive storage 200. The management server includes a CPU 1121, a memory 1122, and a user interface 1124 to be used by the system administrator. Another interface may be included to provide communications between the archive storage 200 and the management server 112. A management program 1123 resides in the memory 1122. The administrator may access the CPU 1121 through the user interface 1124 to execute the management program 1123. The management program processes two types of requests from the administrator that include a table management request and a hash update request. The table management request reads the tables stored in the memory 205 of the archive storage 200 to allow the administrator to edit them and store the edited versions. The hash update request instructs archive storage 200 to update the hash value of each archived object. The management program 1123 also receives alert messages sent from the archive storage 200 and displays them to the administrator.

Because internal storage of data objects in the archive storage 200, 300 is generally perceived to have higher integrity than external storage in external storage devices, such as those shown in Figure 1, a verification of data integrity may be implemented when an object is transferred from one of the external storage devices 102, 104, 106 to the archive storage 200, 300.

In one aspect of the invention, not shown, a content-addressable storage (CAS) may also be coupled to the archive storage 200, 300. Because the data objects stored in a CAS device generally have higher integrity, an integrity verification may be skipped when an object is stored in and retrieved from the CAS system.

Further below, Figure 13 shows the archive storage 200, according to one aspect of the invention in more, detail and Figure 12 shows the archive storage 300, according to another aspect of the invention in more, detail.

One exemplary embodiment of the archive storage 200 of Figure 1 (shown also in Figure 13) includes a CPU 202, a clock 203, disk drives 204 and a memory 205.

The disk drives 204 store one or more data objects 214.

The memory 205 includes a control program 206 and a number of tables that contain management information such as a verification table 207, a migration table 208 and an object table 210. The memory also includes a migration time 209 and a default hash algorithm 211.

The control program 206 is executed on the CPU 202 and processes 1/0 requests sent from clients 110 and background processes that cause the objects 214 to migrate to the external storage devices 102, 104, 106. The control program 206 also updates the integrity information. The timing of execution of object migration is determined by referring to the clock 203 that provides the current time. The control program 206 also communicates with the management computer 112 and processes management requests to control object migration and integrity verification policies defined by an administrator.

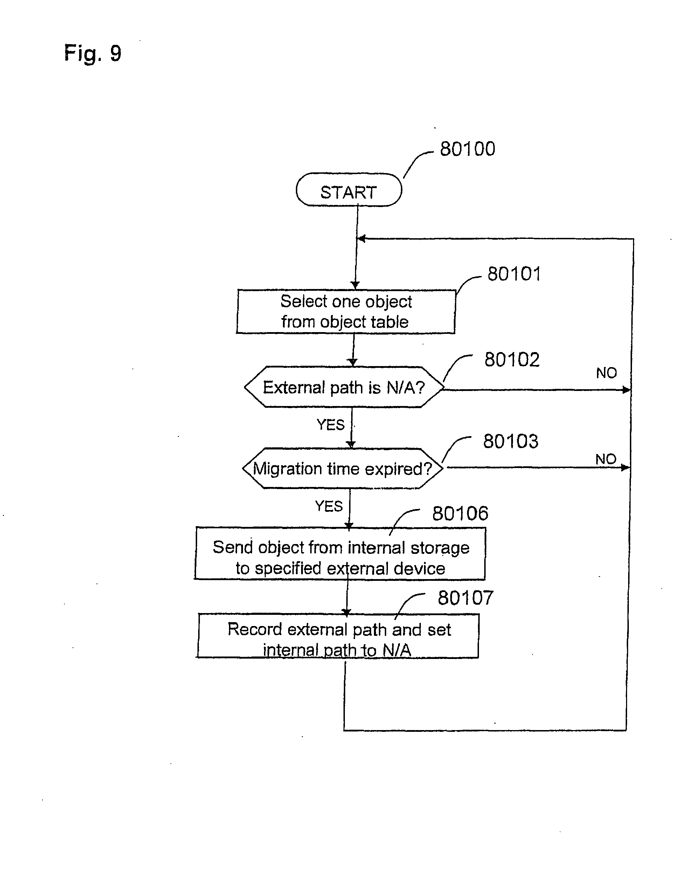

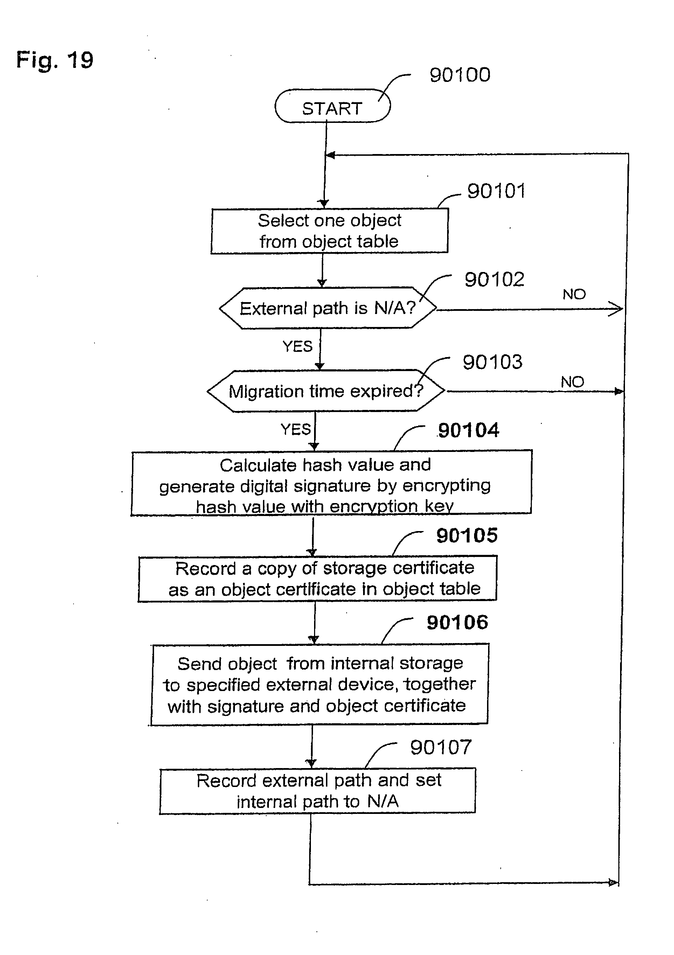

The migration time 209 may be a duration of time and not a point in time. Then, the migration time 209 defines the maximum period allowed between the creation of an object and the time when the object should be sent to an external storage device. Migration time 209 is used to keep the newer objects in the archive storage and send the older ones to one of the cheaper external storage devices. An object migration process that runs in the background on the archive storage sends the older objects to the external storage devices. This process is shown in Figure 9 and Figure 19.

The default hash algorithm 211 contains the name of a hash algorithm used to calculate hash value of the archived objects 214 unless another hash algorithm is specified in the object table 210 for the particular object.

The several tables shown are described below.

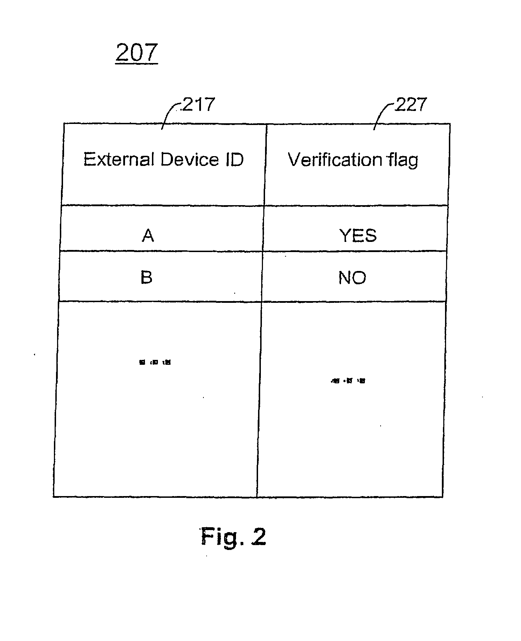

One exemplary verification table 207 is presented in Figure 2.

The verification table 207 defines whether or not the archive storage 200 verifies the data integrity when it reads objects from the external devices 102, 104, 106. For each external device that is coupled to the archive storage, the verification table 207 provides an external device ID 217 and a verification flag 227. The external device ID 217 is a unique identifier of each external device and may include elements of a path to the external storage device such as an IP address, file system mounted by the archive storage system, optical disk ID, tape cartridge ID and the like. The verification flag 227 may have a YES value indicating that if an archived object is read from the corresponding external device, the integrity of the object has to be verified before it is sent to the client computers 110. A NO value indicates that verification is not performed.

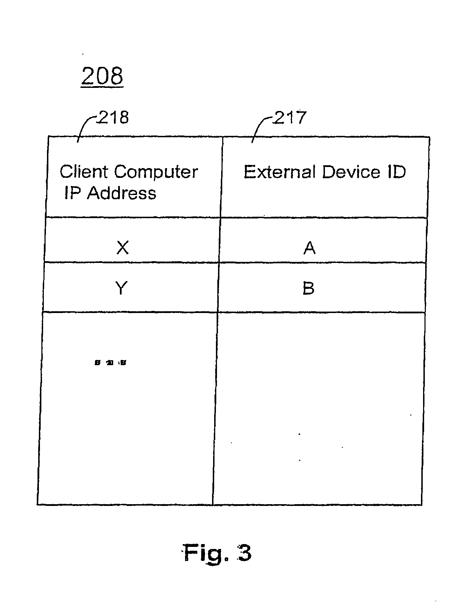

An exemplary migration table 208 is presented in Figure 3.

The migration table defines the external storage devices to which an archived object is caused to migrate from the archive storage. The external device that will receive the migrating object may be defined based on an object ID, a user ID of the user or the client who writes the object, or the like. In the exemplary migration table shown, each object is identified by the IP address 218 of the client computer 110 that develops the object and sends it to the integrated storage system. So, the source of the object is correlated with the device ID 217 of the external device to which the object migrates. In other words, the migration table 208 shows which external storage device 102, 104, 106 is used for the objects written by each client computer 110.

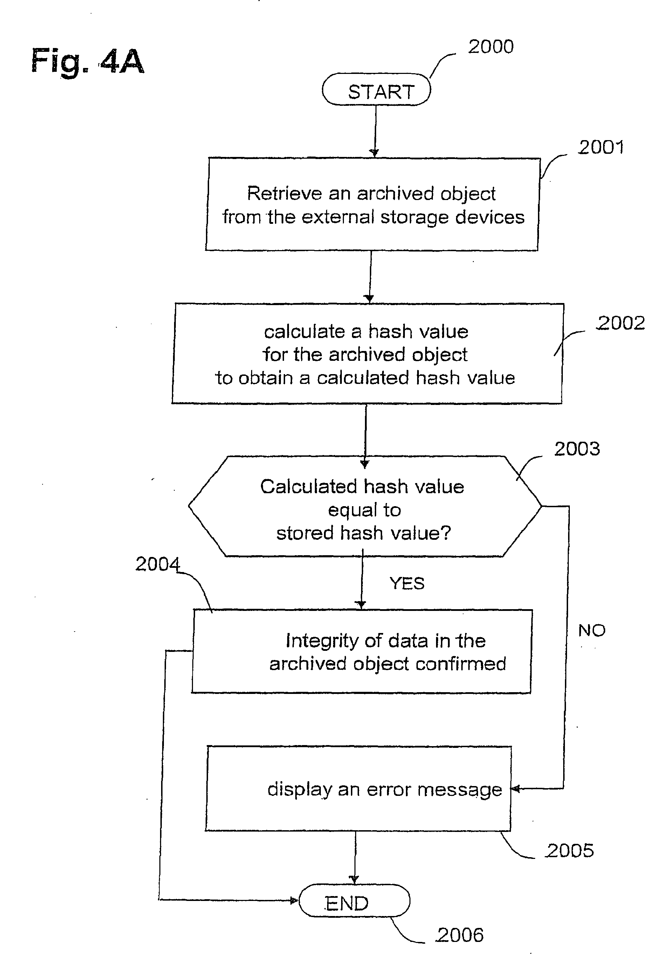

Figure 4A shows an exemplary integrity evaluation according to the first aspect of the invention.

The method begins at 2000. At 2001, an archived object is retrieved from the external storage devices. At 2002, a hash value for the archived object is calculated to obtain a calculated hash value using a hash algorithm stored on the archive storage. At 2003, the calculated hash value is compared with a stored hash value corresponding to the archived object and stored on the archive storage. At 2004, it is determined that the hash values match and integrity of the data in the data object is confirmed and the method ends at 2006. At 2005, it is determined that the hash values do not match and an error message is displayed to one or both of the client computer and the administrator and the method ends at 2006.

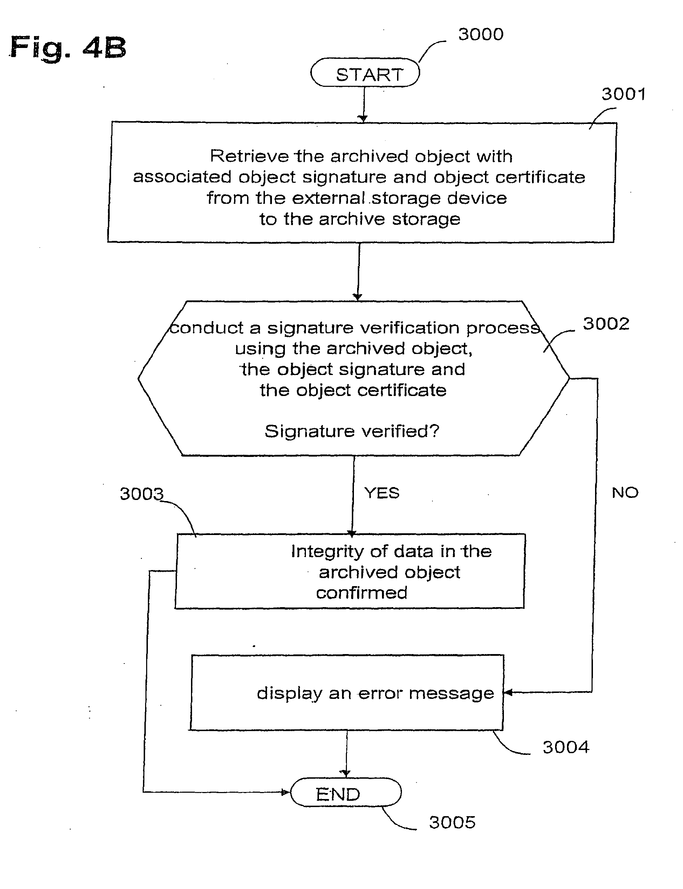

Figure 4B shows an exemplary integrity evaluation according to the second aspect of the invention.

The method begins at 3000. At 3001, an archived object is retrieved from the external storage devices to the archives storage together with associated object signature and storage certificate. At 3002, a signature verification process is conducted for the archived object using the archived object, the object signature and the storage certificate and it is determined whether the signature was verified. At 3003, it is determined whether the signature is verified and the integrity of the data forming the data object is confirmed and the method ends at 3005. At 3004, the signature verification process has failed to verify integrity of the archived object and an error message is displayed to one or both of the client computer and the administrator and the method ends at 3005.

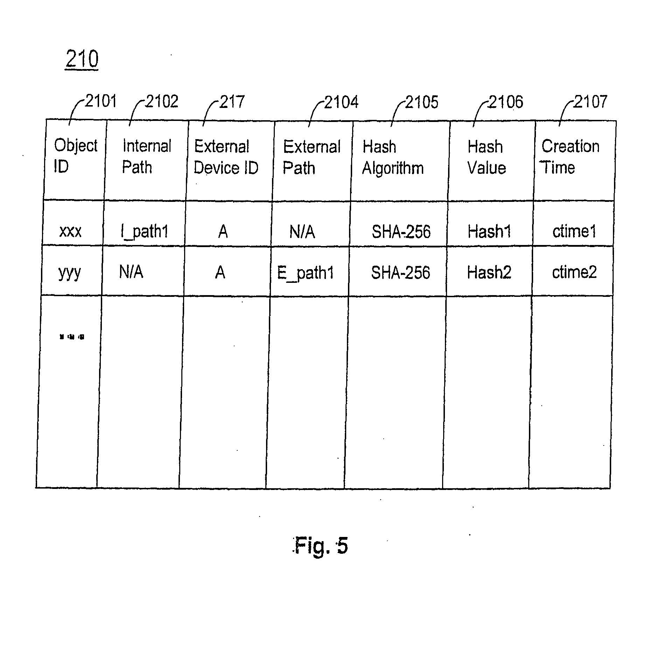

An exemplary object table 210 is presented in Figure 5.

In the object table 210, for each object 214 specified by an object ID 2101 and stored in the archive storage 200 or stored in one of the external storage devices 102, 104, 106 coupled to the archive storage 200 several variables are defined. The variables defined for each object ID 2101 include an internal path 2102, the external device ID 217, an external path 2104, a hash algorithm 2105, a hash value 2106, and a creation time 2107.

The object ID 2101 is used by the client computers 110 to identify an archived object 214. For example, path name and file name can be used as the object ID if the archive storage 200 provides a file system to client computers. The internal path 2102 contains a path to the object stored in an internal storage area of the archive storage 200. If the object is not stored in the internal storage area, the internal path is set to N/A.

If an archived object 214 is stored in an external storage device, the external device ID 217 contains the ID of the device and the external path 2104 contains a path to the stored version of the archived object in the external device. Otherwise, the external path 2104 is set to N/A.

The hash algorithm 2105 contains the name of the hash algorithm used to calculate the hash value the 2106. The hash algorithm is predetermined and stored in the memory of the archive storage.

The creation time 2107 contains the time at when the object 214 is created.

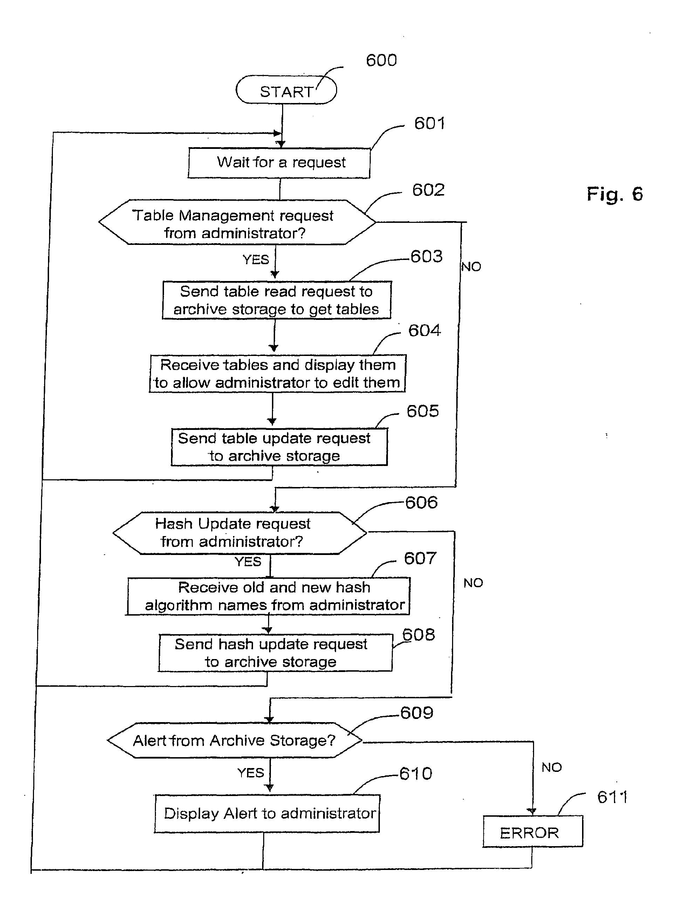

Figure 6 shows methods carried out by a management program, according to the first aspect of the invention.

Processing of the table management request and the hash update request by a management program, such as the management program 1123 of Figures 1, is shown in Figure 6. The requests may be input by an administrator of the integrated storage system that may also be called a user. In the exemplary implementation shown in Figure 6, the administrator may communicate with the management program via the user interface 1124 and the archive storage communicates with the management program via the LAN port 1125.

In this aspect of the invention, the archive storage 200 of Figure 13 is used in the integrated storage system shown in Figure 1.

The method starts at 600. At 601, the management program receives a request from the administrator or from the archive storage.

At 602, the management program determines whether or not the received request is a table management request. If a table management request is received, the management program sends a table read request to the archive storage at 603, and receives and displays the tables to the administrator at 604. After the administrator edits the information in the table, the management program sends the updated information to the archive storage at 605. The method then returns to 601 and waits for a next request.

At 602, if the received request is not a table management request, the method proceeds to 606 where it determines whether the received request is a hash update request. If the received request is a hash update request, at 607 the management program allows the administrator to select names of the old and new hash algorithms. Then, at 608, the management program sends the hash update request which includes the names of the hash algorithms to the archive storage so that the hash values calculated by the old algorithm are replaced by values calculated by the new algorithm.

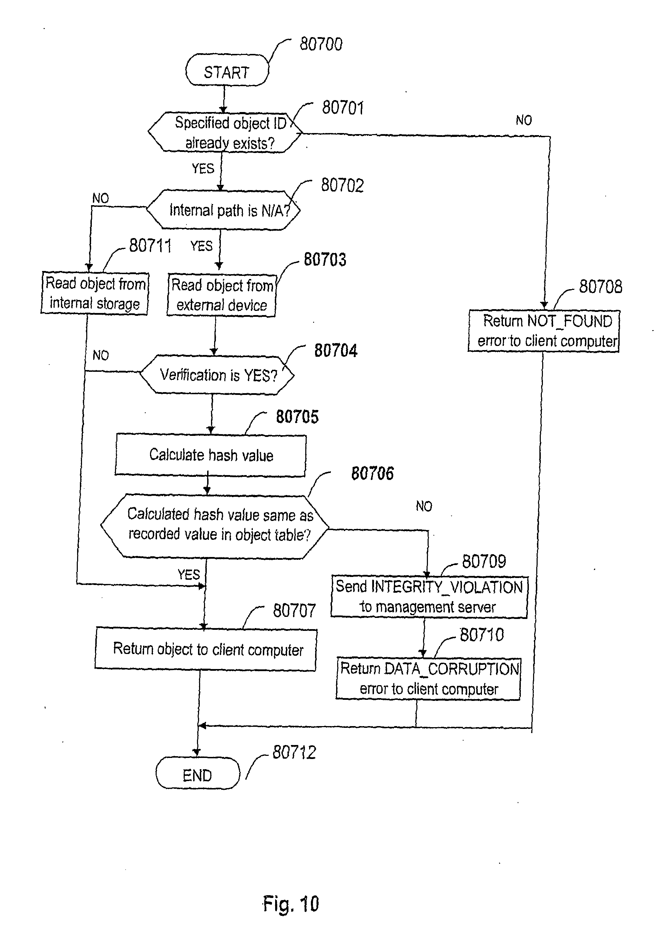

At 606, if the received request is not a hash update request, the method moves to 609 where the management program determines whether the received request is an alert message from the archive storage. If an alert message is received from the archive storage, the management program displays the message to the administrator at 610. The alerts are shown in more detail in Figure 10, 11, and 21. If the received request or message is not one of the three aforementioned types, table management request, hash update request or alert message, the management programs displays an error message to the administrator at 611.

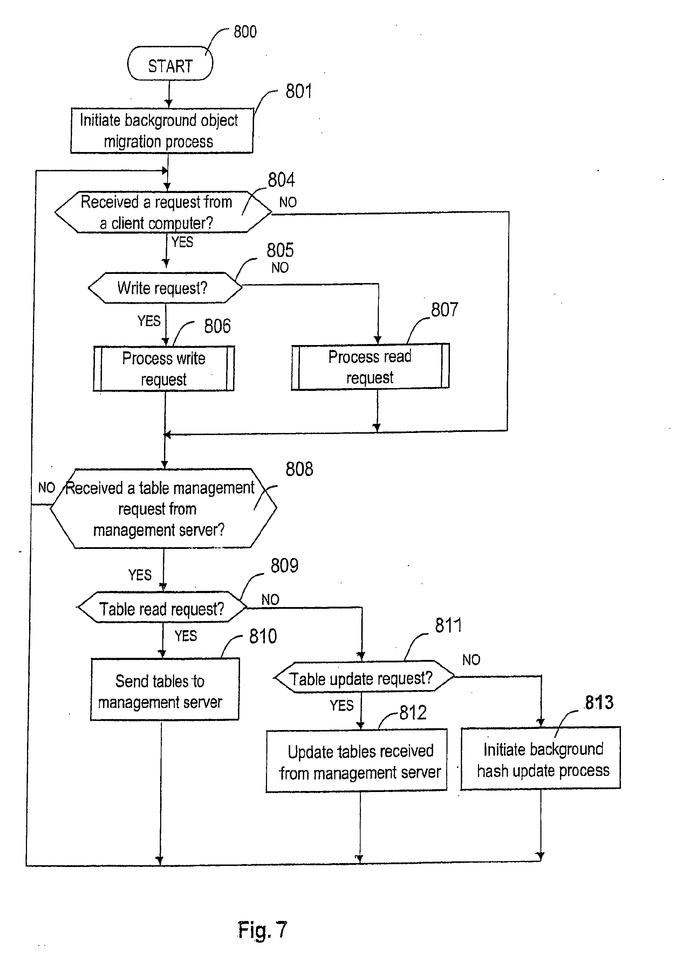

Figure 7 shows a method employed by a control program of an archive storage, according to the first aspect of the invention.

The method carried out according to Figure 7 may be carried out by the control program 206 of the archive storage 200. The archive storage 200 may receive requests from the client computers 110 or from the administrator at the management server 112. The clients may have read or write requests and the administrator may have table management or hash update requests.

The method begins at 800. At 801, the control program initiates a background method which performs object migration from an internal storage area, such as the disk drive 204, in the archive storage 200 to external storage devices, such as external devices 102, 104, 106 of Figure 1.

At 804, the control program determines whether a request has been received at the archive storage from a client computer. The request may be a write request or a read request. At 805, 806 and 807 the control program determines whether the request is a write or a read request and processes the request accordingly.

At 808, the control program determines whether a management request has been received from a management server. If not, the method returns to 804. If the control program determines that the archive storage has received a request from the management server, it then determines the type of request received. The management server can have a table read request, a table update request, or a hash update request.

At 809, the control program determines whether the request is a table read request. If a table read request is received from the management server, at 810 the control program sends a verification table, a migration table, a migration time and a default hash algorithm to the management server. In one exemplary aspect, the verification table 207, the migration table 208, the migration time, 209 and the default hash algorithm 211 may be sent to the management server 112 by the control program 206 of the archive storage 200.

At 811, the control program determines if the request is a table update request. If so, at 812 the control program updates the tables with the information input by the administrator.

Otherwise, the request is a hash update request and the control program initiates a background hash update process at 813.

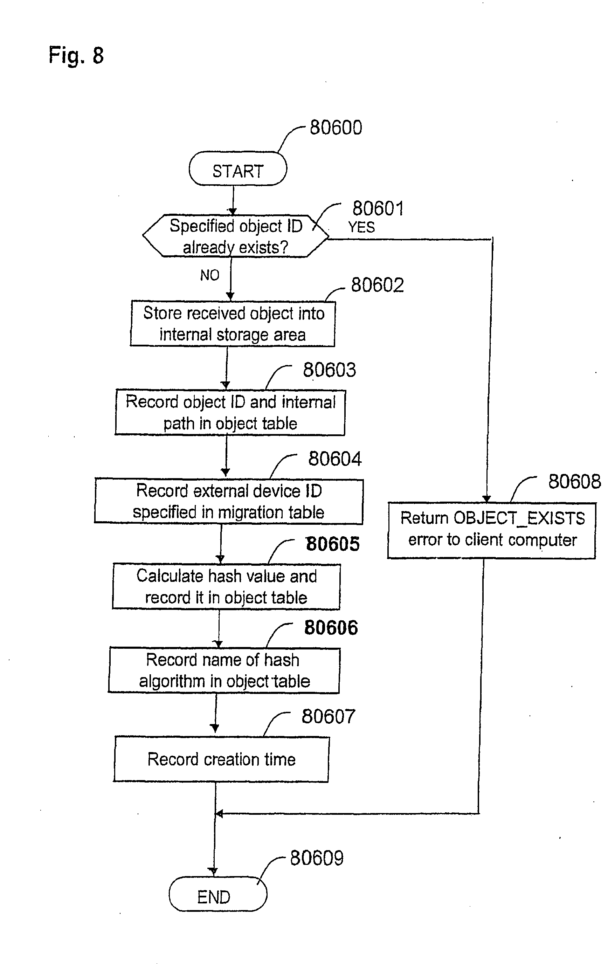

Figure 8 shows an exemplary method of processing a write request, according to the first aspect of the invention.

Figure 8 shows a method for processing a write request such as the write request 806 of Figure 7 that is sent to an archive storage, such as archive storage 200, from a client computer 110.

The method begins at 80600. The object to be written is identified by its object ID and at 80601, it is determined whether the object ID specified by the write request already exists. If this object exists, at 80608 the control program 206 returns an OBJECT_EXISTS error to the client computer because the WORM storage does not allow existing objects to be overwritten.

Otherwise, and if the object does not exist on the archive storage, at 80602, the control program stores the object into the internal storage area and at 80603 records the object ID and its internal path in the object table 210. Also, at 80604, the control program records the external device ID which is defined in the migration table 208 based on the client IP address 218 of the client computer 110 which issues the write request. The client IP addresses 218 are available in the migration table 208.

At 80605, the control program calculates a hash value by using an algorithm specified in default hash algorithm 211 and records the hash value in the object table. At 80606, the control program records the name of the hash algorithm that is used for creating the hash value in the object table.

Finally, at 80607, the control program reads the current time from clock 203 and records it in the object table as the creation time of the object that is being created in response to the write request.

At 80609, the method of processing of the write request ends.

It is noted that any coding of the object based on the content of the object may be used instead of the hash value.

Figure 9 shows an exemplary method for background object migration, according to the first aspect of the invention.

Figure 9 shows one exemplary implementation of the background objet migration process 801 of Figure 7 that is performed by the control program 206. This process occurs in the background of the processing performed at the archive storage 200. Objects 214 that are internally stored and are older than a specified time are sent to the external storage devices such as external devices 102, 104, 106 of Figure 1.

For each object recorded in the object table 210, if the corresponding external path 2104 is N/A and the difference between the current time and the creation time 2107 of the object exceeds the migration time 209, the control program sends the object from the internal storage area 204 to one of the external storage devices whose device ID 2101 is specified in the object table 210. Finally, the control program 206 records the path to the object in the external device as an external path 2104 and sets the internal path 2102 to N/A in the object table 210.

The method begins at 80100. At 80101, one object is selected from the object table. At 80102 the control program determines whether an external path is specified for this object. If an external path has been specified, this object is already in an external storage device and there is no need for the object migration process. So, the method returns to 80101 and another object is selected. If an external path is not specified, then the object has to be sent from the archive storage to one of the external storage devices if it has been residing on the internal storage for too long.

At 80103, the control program determines if the duration of storage of the object in the archive storage, from its time of creation to the present, has been longer than the maximum storage time, or the migration time, that is specified for this object. If the object is relatively newly created, it may stay in the archive storage and is not exiled to the external storage devices and the method returns to 80101 to select another object.

If the object has been residing in the archive storage longer than its allotted migration time, then at 80106, the object is sent from the archive storage to the external storage device specified for this object in the object table.

At 80107, the external path to the object in the external device is recorded in the object table and the internal path is reset because this object no longer resides in the internal storage of the archive system.

There are no steps 80104 and 80105 in the flow diagram of the method described above.

Figure 10 shows an exemplary method of processing a read request, according to the first aspect of the invention.

Figure 10 shows a method of processing a read request such as the read request 807 of Figure 7 that is sent to an archive storage, such as the archive storage 200, from a client computer 110.

The method begins at 80700. At 80701, the method determines if the object specified by the client in the read request already exists. If object ID specified by the read request does not exist, at 80708 the control program returns a NOT_FOUND error to the client computer. If the object exists, at 80702 the control program determines whether an internal path is specified in the object table for this object. If the internal path of the specified object is not set to N/A, then the requested object exists within the archive storage and at 80711 the control program reads the object from the internal storage area specified by the internal path.

Otherwise, at 80703 the control program reads the requested object from an external storage device specified by the corresponding external device ID and external path recorded in the object table. Reading from an external device involves extra steps because the object may be corrupted as a result of migration to the external device.

At 80704, the control program determines whether the verification flag 227 of the external device is set to YES. If not, the method proceeds to 80707 where the requested object is provided to the client computer that requested it. If the object requires verification according to the verification flag set in the verification table, then at 80705, the control program calculates a hash value for the object that is being read. At 80706, the control program compares the calculated hash value with the hash value recorded in object table. If the calculated and the recorded hash values are the same, the object is not altered or corrupted when or after it migrated from the archive storage to the external storage device. In this case, at 80707 the control program returns the object to the client computer.

On the other hand, if the compared hash values are different, at 80709 the control program sends an INTEGRITY_VIOLATION alert to the management server and at 80710 returns a DATA_CORRUPTION error to the client computer. This process notifies the client computer that integrity of the requested object is in doubt and prevents the client computer from receiving the corrupted object even if the object is stored in an external storage device which does not have functions to guarantee data integrity.

At 80712 the method of responding to the read request 807 ends.

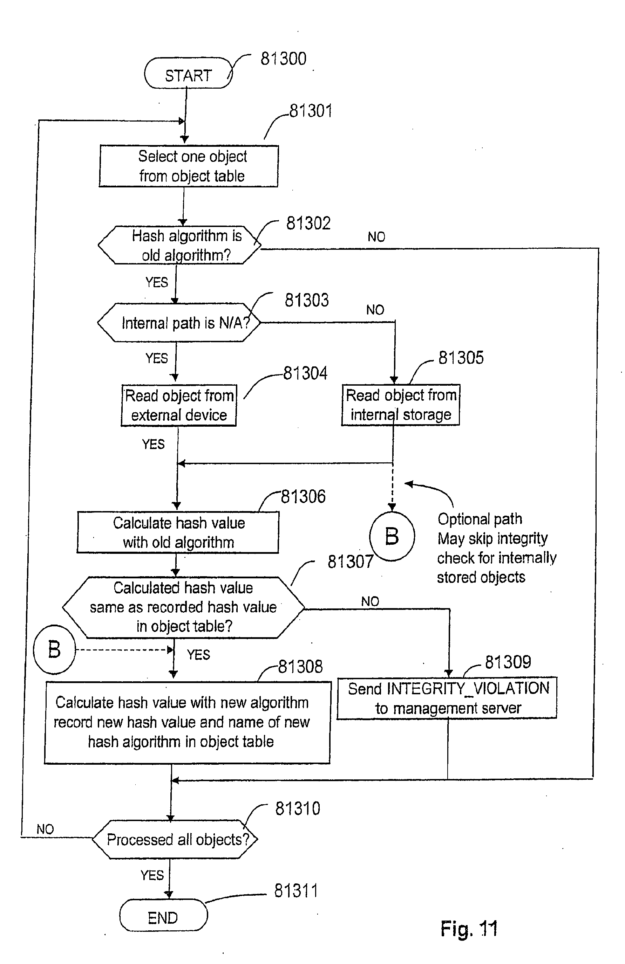

Figure 11 shows a process of hash update according the first aspect of the invention. The background hash update process 813 of Figure 7 may be carried out according to the exemplary method shown in Figure 11. The method of Figure 11 may also be carried out in response to a hash update request 606 from an administrator or user that is sent from the management server. If a cryptographic hash algorithm becomes vulnerable, it is replaced by a new safer algorithm. In the first aspect of the invention, if the hash algorithm is updated, the hash values calculated by old algorithm can be recalculated by request of the administrator.

Figure 11 shows the flow of the hash update process for updating the old hash values. When the control program receives a hash update request 606 from the management server which contains names of the new and old hash algorithms, the control program initiates a background hash update process 813 as described above.

The method begins at 81300.

At 81301, one object is selected from the objects recorded in the object table. The process repeats until all objects have been processed,

At 81302, the control program determines whether the hash algorithm corresponding to the object that is recorded in the object table is an old algorithm. If the hash algorithm is not old, the method proceeds to process the next object.

If the hash algorithm is an old algorithm, in 81303, 81304 and 81305, the control program reads the object from internal or external storage and checks data integrity of the object by calculating the hash value of the object by using the old hash algorithm at 81306 and comparing the calculated hash value with the hash value that is recorded in the object table at 81307. If there is no discrepancy between the calculated and recorded hash values and there is no integrity problem, at 81308 the control program calculates a new hash value by using the new hash algorithm and records the new hash value and the name of the new algorithm in the object table. Otherwise, if an integrity issue is detected, at 81309, the control program sends an INTEGRITY_VIOLATION alert to the management server to notify the administrator of data corruption in the object.

At 81310, these steps are repeated for all objects in the object table. The method ends at 81311 after all objects have been processed.

By this process, the hash values calculated by an old and vulnerable cryptographic hash algorithm can be replaced by values calculated by a new and safer hash algorithm.

In one aspect of the invention described above, an integrity check is performed whether the object is stored internally or externally. However, integrity of the internally stored objects is less in doubt and the process of checking the integrity of the internally stored object may be skipped as indicated by the dashed lines in Figure 11.

Figure 12 shows an exemplary archive storage according to a second aspect of the invention.
Figure 13 shows an exemplary archive storage according to a first aspect of the invention as a reminder and is similar to the archive storage shown in Figure 1.

The archive storage 300 shown in Figure 12 is similar to the archive storage 200 shown in Figure 13 with certain differences. The differences are described in further detail below.

The archive 300 includes a memory 305. The memory 305 stores a control program 306, a number of tables including a verification table 307, a migration table 308, and an object table 310. Additionally, the memory 505 includes a migration time 309, a root certificate 311, an encryption key 312, and a storage certificate 313 that includes a decryption key 314.

A comparison between the memory 205 of the archive storage 200 of Figure 13 and the archive storage 300 of Figure 12 shows that the default hash algorithm 211 of the embodiment shown in Figure 13 is replaced by the root certificate 311, the encryption key 312, and the storage certificate 313 which contains the decryption key 314 in Figure 12. The encryption key 312 is used to generate digital signatures by encrypting the hash value of an object. The decryption key 314 is used to obtain a hash value for a stored object from a digital signature associated with the stored object by decrypting the digital signature. The storage certificate 313 contains the decryption key 314 and is signed by a trusted authority which issues the root certificate 311. The validity of the storage certificate can be verified by decrypting the signature of the trusted authority with a key contained in the root certificate 312. Different mechanisms that are not described here may be used for generating the digital signature.

The verification table 307 and the object table 310 of the archive storage 300 of Figure 12 are also different from the verification table 207 and the object table 210 of the archive storage 200 of Figure 13.

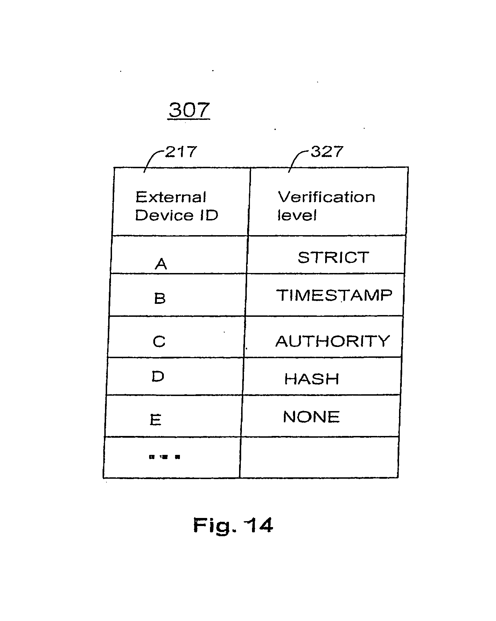

One exemplary verification table 307 is shown in Figure 14.

In this aspect of the invention, instead of the verification flag 227 of the verification table 207, a verification level 327 is defined for each external device 217. The verification level 327 can take values such as NONE, HASH, AUTHORITY, TIMESTAMP, or STRICT. NONE means that the control program 306 does not perform any integrity verification. HASH means a hash value is verified but the validity of a certificate attached to the object is not verified. AUTHORITY means, in addition to HASH, the validity of issuer of the certificate is verified by using the root certificate 311 but the expiration of the certificate is not checked. TIMESTAMP means, in addition to AUTHORITY, it is confirmed that the certificate has not expired. STRICT means the certificate attached to an archived object 214 must be identical to the storage certificate 313. If the certificate attached to an object contained in an external device 102, 104, 106 whose verification level is STRICT is different from the storage certificate 313, data integrity of the object is compromised even if the storage certificate is valid.

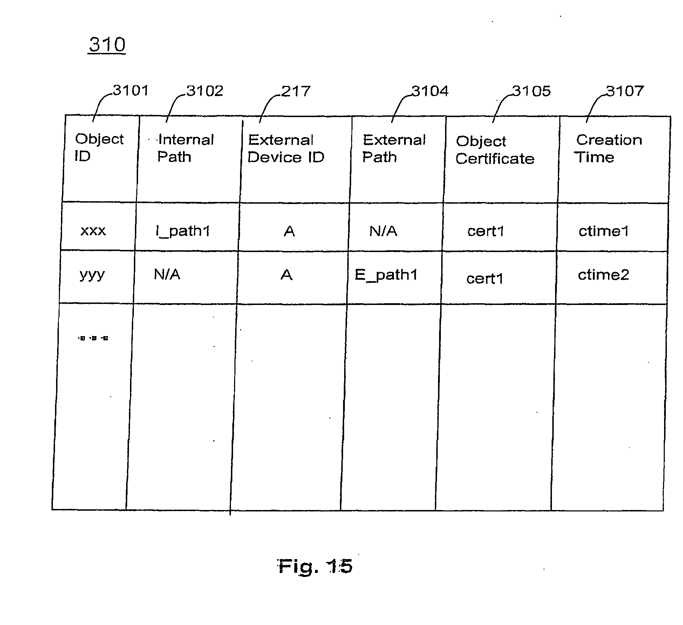

An exemplary object table 310 is presented in Figure 15.

In the object table 310 used in the memory 306 of the archive storage 300, the hash algorithm 2105 of table 210 is replaced by a certificate expiration time 3105 of the storage certificate. The hash value 2106 is not stored in the object table 310. Instead the digital signature is stored in the external devices 102, 104, 106 together with the copy of the object.

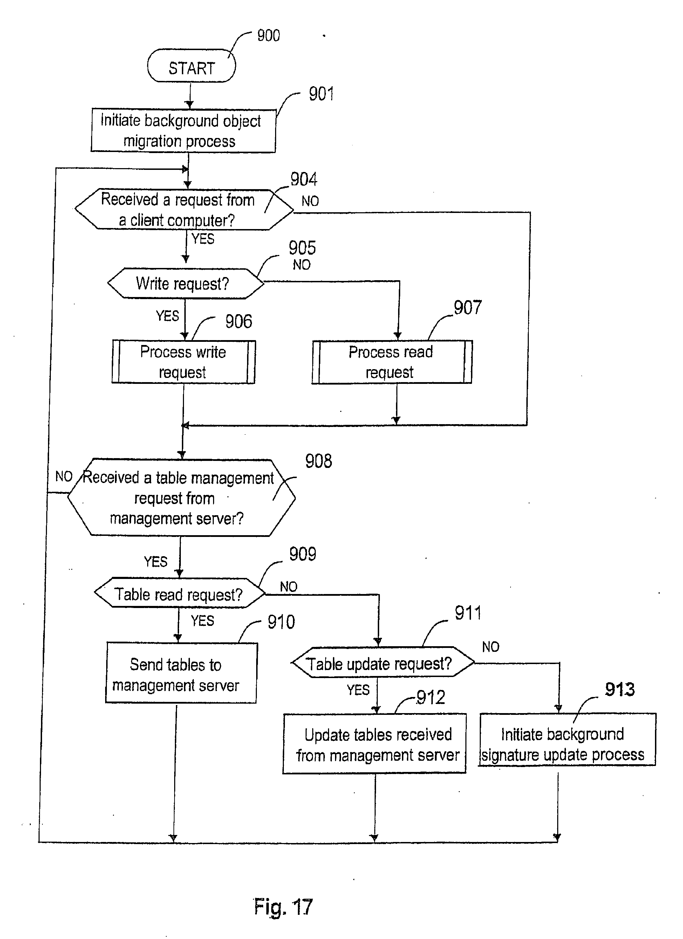

In a variation of the object table 310, a hash algorithm name may be included for each object that may be used for the process of background object migration 901 of Figure 17 that is shown in detail in Figure 19. Alternatively or additionally, the memory 305 of Figure 12 may also include a default hash algorithm similar to the default hash algorithm 211 of the memory 205 of Figure 13. Instead of individual hash algorithms for each object, his default hash algorithm that is not shown in Figure 12, may be used for the process of background object migration 901 of Figure 17 that is shown in detail in Figure 19.

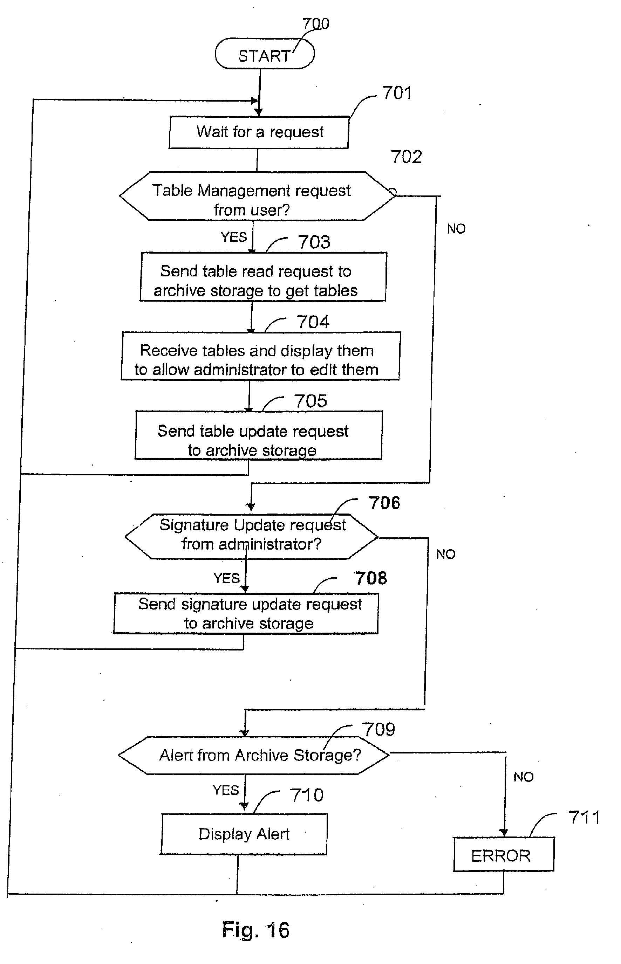

Figure 16 shows methods carried out by a management program, according to the second aspect of the invention.

When the archive storage 300 of Figure 12 is used in the integrated storage system of Figure 1, and a certified digital signature is used, the method of Figure 16 is employed by a management program, such as the management program 1123 of Figure 1.

The method shown in Figure 16 is similar to the method shown in Figure 6. Steps 701, 702, 703, 704, 705, 709, 710 and 711 of Figure 16 are similar to steps 601, 602, 603, 604, 605, 609, 610 and 611 of Figure 6.

However, the steps associated with the hash update request including 606, 607 and 608 are replaced by steps associated with a signature update request 706 and 708 in Figure 16. At 706, the management program determines whether a signature update request is received from the administrator. If a signature update request is received, at 708, the management program sends the signature update request to the archive storage. The signature update request may contain a certificate to specify a certificate associated to objects which have signatures to be updated.

The archives storage used in the method of Figure 16 is the archive storage 300 of Figure 12 whereas the archive storage used in the method of Figure 6 is the archive storage 200 of Figure 13.

Figure 17 shows a method employed by a control program of an archive storage, according to the second aspect of the invention.

The method carried out according to Figure 17 may be carried out by the control program 306 of the archive storage 300 of Figure 12. The archive storage 300 may receive requests from the client computers 110 or from the administrator at the management server 112. The clients may have read or write requests and the administrator may have a table management request or a signature update request.

All, but one, of the steps of the method shown in Figure 17 are similar to the steps of Figure 7. The exception is that at 913, the control program initiates a background process to update digital signatures instead of updating hash values.

Further, at 909, the verification table 307, the migration table 308, the migration time 309, the root certificate 311, the encryption key 312 and the storage certificate 313 including the decryption key 314 may be sent to the management server 112 by the control program 306 of the archive storage 300.

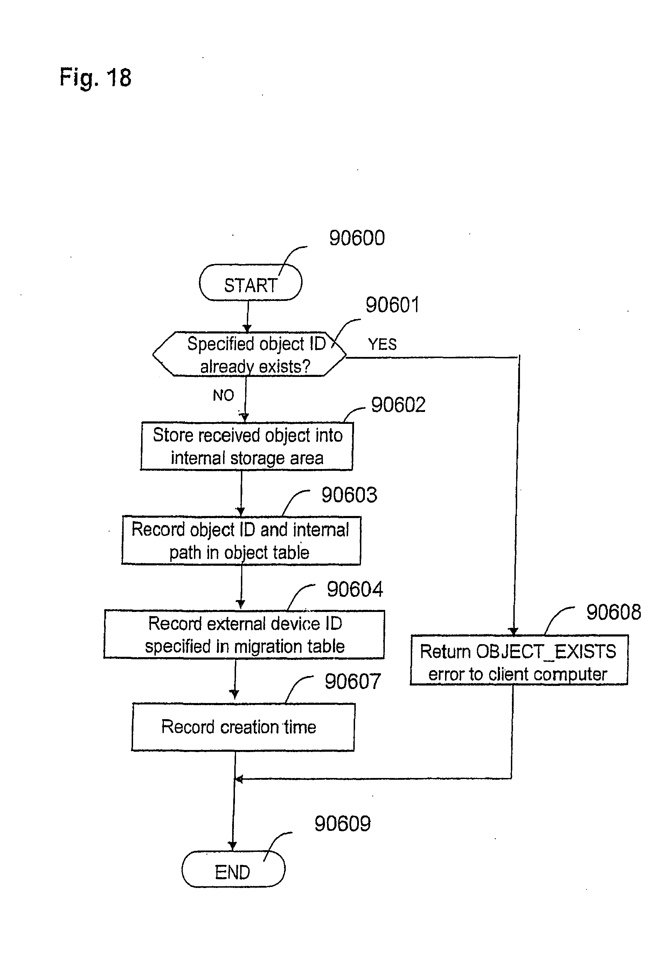

Figure 18 shows an exemplary method of processing a write request, according to the second aspect of the invention.

Figure 18 shows a method for processing a write request such as the write request 906 of Figure 17 that is sent to an archive storage, such as archive storage 300, from a client computer 110. In this aspect of the invention, no hash value or digital signature is generated when an object is written to the integrated storage system. Instead integrity information is generated when the object migrates to the external storage devices.

The write request, in this aspect of the invention, only writes the object to the internal storage of the archive storage and does not cause the object to migrate to the external storage devices. So no integrity assurance measures such as hashing or encryption are done at this stage.

Steps 90600, 90601, 90602, 90603, 90604, 90608 and 90609 are similar to steps 80600, 80601, 80602, 80603, 80604, 80608 and 80609 of Figure 8. However, in Figure 18, there are not steps corresponding to 80605 and 80606 because in this aspect of the invention, the control program 306 does not calculate a hash value when an object is being written to the archive storage 300. Rather, as seen in the object migration process of Figure 19 that corresponds to this aspect of the invention, a hash value is calculated and encrypted when the object is being moved from the archive storage to the external storage devices.

Figure 19 shows an exemplary method for background object migration, according to the second aspect of the invention.

If an object is to migrate from internal storage to an external device, then a hash value is calculated for the object and the hash value is encrypted to generate a digital signature. The external device stores the object together with its digital signature and the corresponding certificate.

The hash algorithm used may be a default hash algorithm used for all objects or a hash algorithm that is specified for a particular object and listed in a table such as the object table 310. This hash algorithm is not shown.

For each object recorded in the object table 310, if the corresponding external path 3104 is N/A and the creation time 3107 of the object older than the migration time 309, the control program sends the object from the internal storage area 204 to one of the external storage devices whose device ID 3101 is specified in the object table 310. Unlike the method shown in Figure 9, the control program 306 calculates a hash value when an object is migrated and makes a digital signature by encrypting the hash value by using the encryption key 312 that is stored in the memory 305. The storage certificate which includes the decryption key is recorded in object table 310. The object, its digital signature, and the storage certificate migrate to the external device. Finally, the control program 306 records the path to the object in the external device as an external path 3104 and sets the internal path 3102 to N/A in the object table 310.

As such, steps 90101, 90102, 90103 and 90107 of Figure 19 are similar to steps 80101, 80102, 80103 and 80107 of Figure 9. However, steps 90104 and 90105 are added to the method of Figure 19. Further, step 90106 includes measures in addition to step 80106.

At 90104, if the object is old enough to be sent to an external storage device, a hash value is calculated for the object and encrypted using the encryption key available in the memory. As a result, a digital signature is generated for the migrating object. The hash algorithm used may be provided in the object table

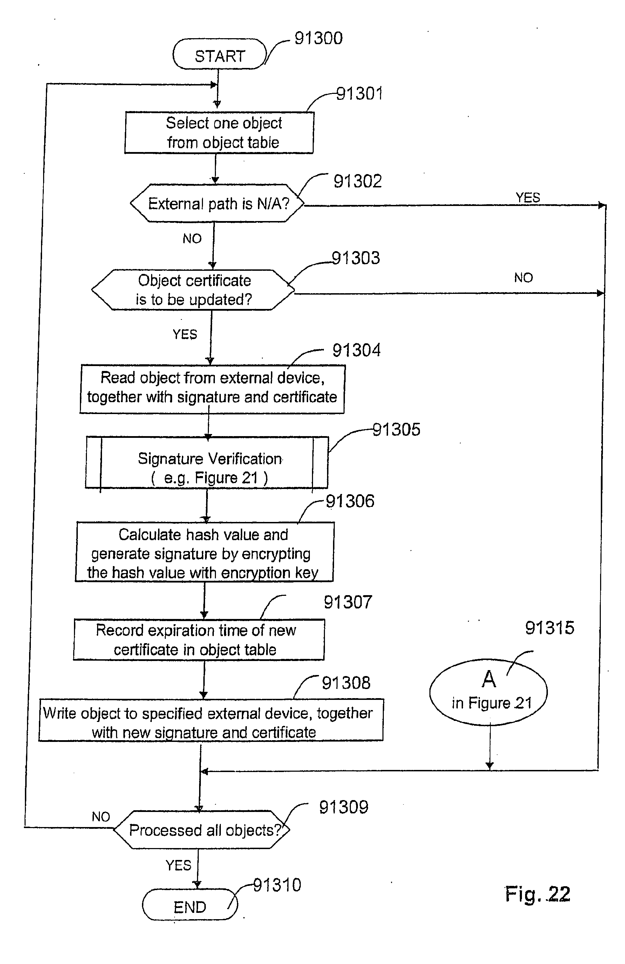

At 90105, the storage certificate is recorded in the object table 310 for the migrating object. Record of the certificate in the object table allows storage system control program to check the certificate to be updated without reading it from an external device in Fig. 22.

At 90106, in addition to the migrating object, its associated signature and an object certificate, i.e., a copy of storage certificate are also sent to the external storage device.

The storage certificate is the storage certificate associated with the object and may be compared with the current storage certificate 313 stored in the archive storage.

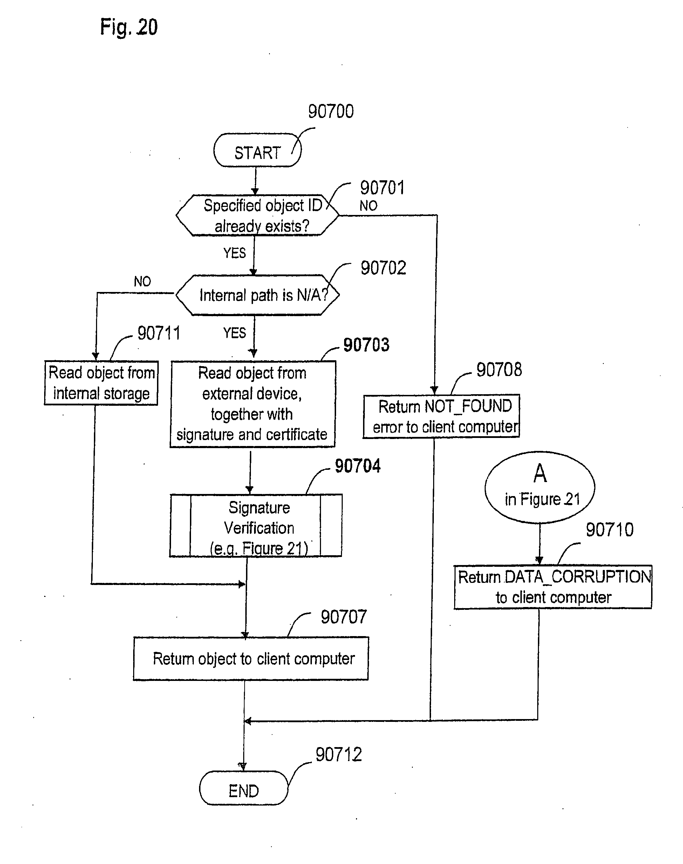

Figure 20 shows an exemplary method of processing a read request, according to the second aspect of the invention.

Figure 20 shows a method of processing a read request such as the read request 907 of Figure 17 that is sent to an archive storage, such as the archive storage 300, from a client computer 110.

In responding to the read request 907, the control program 306 reads not only the archived object that is the subject of the read request but also a digital signature and a certificate attached to the object from external storage device at 90703. At 90704, during signature verification, the control program verifies data integrity of the object based on the verification level 327 defined in the verification table 307.

The method of responding to the read request 907 is different from the method of responding to the read request 807 in that it does not skip verification and does not calculate a hash value or compare the calculated and stored hash values. As such, the steps 80705, 80706, and 80709 of Figure 10 have no counterparts in Figure 20.

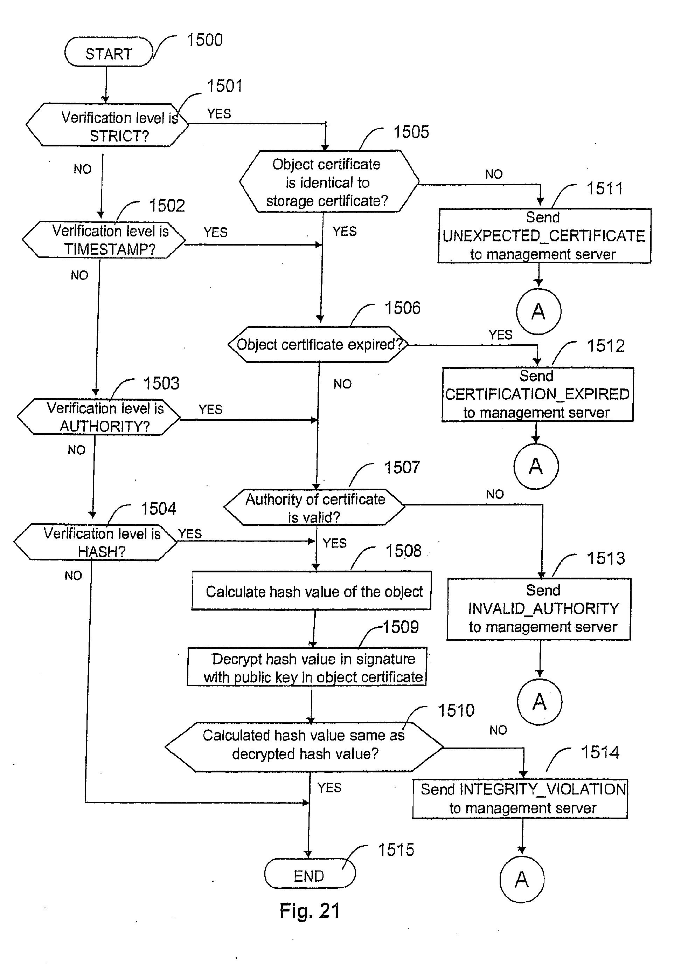

The signature verification process 90704 is described in detail in Figure 21. Further, the inputs A to the 90710 that cause the control program to return a DATA_CORRUPTION message to the client computer are described in Figure 21. Under some circumstances, shown in Figure 21, the signature verification 90704 leads to 90710.

Figure 21 shows a process of signature verification according to the second aspect of the invention.

The signature verification 90704 of Figure 20 is described in further detail in Figure 21. If an integrity violation is detected, the control program sends an alert message to the administrator at the management server which indicates the type of violation and the process then moves to 90710 of Figure 20 where a DATA_CORRUPTION message is also sent to the client computer.

At 1500 the method begins. At 1501, 1502, 1503 and 1504, the control program checks the verification level of the external storage device which stores the requested object.

If the verification level is STRICT, at 1505 the certificate associated with the object is compared with the current storage certificate. If the two certificates are not identical, at 1511, the control program sends an UNEXPECTED_CERTIFICATE message to the management server before moving to 90710 of Figure 20 to warn the client computer as well. If no discrepancy is found, still at 1506 the control program determines whether the certificate is current or has expired based on the expiration time recorded in the object certificate read from the external device. If the certificate has expired, at 1512, the control program sends a CERTIFICATE_EXPIRED message to the management server and then moves to 90710 to warn the client computer. If the no discrepancy is found and the certificate is current, the control program still checks at 1507 whether the authority of the certificate is valid. If the authority of the certificate is not valid, the control program sends a INVALID_AUTHORITY message to the management server at 1513 before moving to 90710 to warn the client computer.

If no discrepancy is found, the certificate is current and valid authority, a hash value is calculated from the object at 1508. At 1509, the hash value in the digital signature associated with the object is decrypted using the public key in the certificate. At 1510 the calculated hash value is compared with the decrypted hash value. If the two are not the same, at 1514 an INTEGRITY_VIOLATION message is sent from the control program to the management server and the process moves to 90710 to warn the client computer next.

Lower verification levels require some but not all of the above security steps.

If the verification level is TIMESTAMP, the process goes through all but steps 1505 and 1511 above.

If the verification level is AUTHORITY, the process goes through all but steps 1505, 1506, 1511 and 1512 above.

If the verification level is HASH, the process goes through only steps 1508, 1509, 1510 and 1514 above.

The process of signature verification 90710 ends at 1515. At this point the process of Figure 21 moves to 90707 where no error is reported and the object that is the subject of the read request is returned to the requesting client computer.

Figure 22 shows a process of signature update according to the second aspect of the invention.

The background process 913 of Figure 17 for signature update is shown in more detail in Figure 22. If an storage certificate expires, old storage certificates and digital signatures generated by using old keys should be replaced by new storage certificates and signatures generated by using new keys.

Expiration of a storage certificate attached to an archived object can be checked by comparing the current time with the expiration time recorded in the object table. For each object which is stored in an external device and has an expired certificate in the object table, the control program updates the digital signature and the certificate stored in the external device after verification of data integrity with the current signature and storage certificate. In this aspect of the invention, the control program can detect corruption or alteration of archived objects without storing integrity information for each object in object table and instead by storing a digital signature and an object certificate in the external storage devices together with the object. Data integrity violation can be detected at various verification levels specified by the administrator. The type of violation can be reported to client computer and the management server. Figure 21 shows how various verification levels are treated by the signature verification process.

The method begins at 91300. At 91301 the objects are selected one by one from the object table and the method continues until all objects have been evaluated. Signature update of Figure 22 is conducted for objects stored on external devices and if the object is determined to be stored internally in the archive storage at 91302, the method moves to the next object in the object table.

If the object is stored externally, then at 91303, the control system determines if the storage certificate associated with the object is to be updated or not. If the object certificate recorded in the object table is not identical to a certificate specified in the signature update request, the method moves to the next object. If the certificate is identical, at 91304 the object together with its associated digital signature and storage certificate are read from the external device. If a signature update request specifies no certificate, all certificates which are not identical to the current storage certificate are to be updated.

At 91305 signature verification is performed. An exemplary signature verification is shown in Figure 21. Also error messages generated at A in Figure 21 are returned to the flow diagram of Figure 22 at 91315.

At 91306, a new hash value is calculated for the object and encrypted using the encryption key 314 stored in the storage certificate 313 on the memory 305 of the archive storage 300.

At 91307, the new storage certificate is recorded in the object table.

At 91308, the object is written to the specified external storage device together with the new signature and the updated storage certificate.

At 91309, if not all objects are processed, the method moves back to select the next object in the object table.

At 91310, the method ends and the signature is updated for each object that was associated with an old certificate.

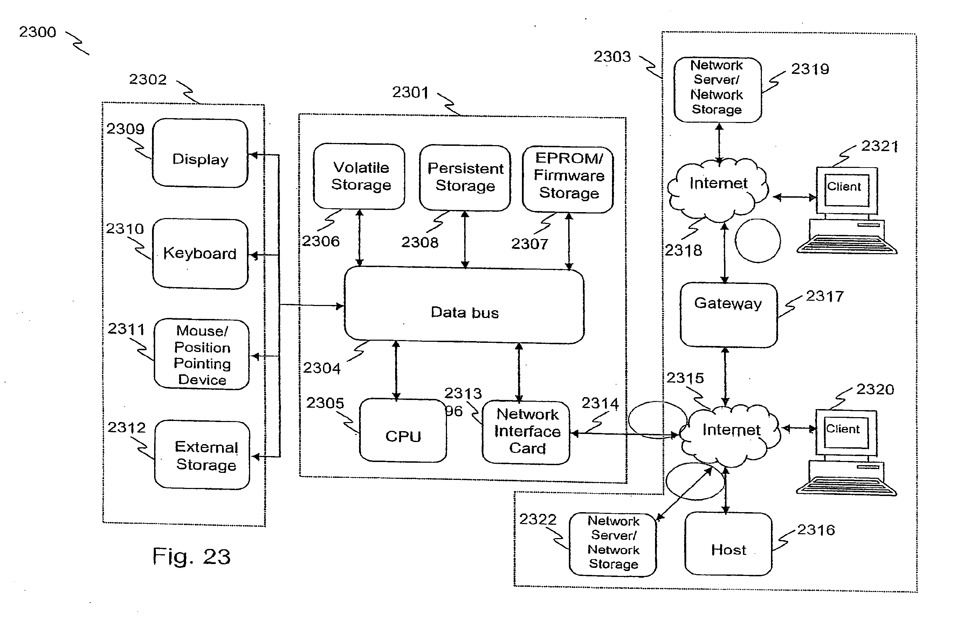

Figure 23 is a block diagram that illustrates an embodiment of a computer/server system 2300 upon which an embodiment of the inventive methodology may be implemented. The system 2300 includes a computer/server platform 2301, peripheral devices 2302 and network resources 2303.

The computer platform 2301 may include a data bus 2304 or other communication mechanism for communicating information across and among various parts of the computer platform 2301, and a processor 2305 coupled with bus 2301 for processing information and performing other computational and control tasks. Computer platform 2301 also includes a volatile storage 2306, such as a random access memory (RAM) or other dynamic storage device, coupled to bus 2304 for storing various information as well as instructions to be executed by processor 2305. The volatile storage 2306 also may be used for storing temporary variables or other intermediate information during execution of instructions by processor 2305. Computer platform 2301 may further include a read only memory (ROM or EPROM) 2307 or other static storage device coupled to bus 2304 for storing static information and instructions for processor 2305, such as basic input-output system (BIOS), as well as various system configuration parameters. A persistent storage device 2308, such as a magnetic disk, optical disk, or solid-state flash memory device is provided and coupled to bus 2301 for storing information and instructions.

Computer platform 2301 may be coupled via bus 2304 to a display 2309, such as a cathode ray tube (CRT), plasma display, or a liquid crystal display (LCD), for displaying information to a system administrator or user of the computer platform 2301. An input device 2310, including alphanumeric and other keys, is coupled to bus 2301 for communicating information and command selections to processor 2305. Another type of user input device is cursor control device 2311, such as a mouse, a trackball, or cursor direction keys for communicating direction information and command selections to processor 2304 and for controlling cursor movement on display 2309. This input device typically has two degrees of freedom in two axes, a first axis (e.g., x) and a second axis (e.g., y), that allows the device to specify positions in a plane.

An external storage device 2312 may be coupled to the computer platform 2301 via bus 2304 to provide an extra or removable storage capacity for the computer platform 2301. In an embodiment of the computer system 2300, the external removable storage device 2312 may be used to facilitate exchange of data with other computer systems.

The invention is related to the use of computer system 2300 for implementing the techniques described herein. In an embodiment, the inventive system may reside on a machine such as computer platform 2301. According to one embodiment of the invention, the techniques described herein are performed by computer system 2300 in response to processor 2305 executing one or more sequences of one or more instructions contained in the volatile memory 2306. Such instructions may be read into volatile memory 2306 from another computer-readable medium, such as persistent storage device 2308. Execution of the sequences of instructions contained in the volatile memory 2306 causes processor 2305 to perform the process steps described herein. In alternative embodiments, hard-wired circuitry may be used in place of or in combination with software instructions to implement the invention. Thus, embodiments of the invention are not limited to any specific combination of hardware circuitry and software.

The term "computer-readable medium" as used herein refers to any medium that participates in providing instructions to processor 2305 for execution. The computer-readable medium is just one example of a machine-readable medium, which may carry instructions for implementing any of the methods and/or techniques described herein. Such a medium may take many forms, including but not limited to, non-volatile media, volatile media, and transmission media. Non-volatile media includes, for example, optical or magnetic disks, such as storage device 2308. Volatile media includes dynamic memory, such as volatile storage 2306. Transmission media includes coaxial cables, copper wire and fiber optics, including the wires that comprise data bus 2304. Transmission media can also take the form of acoustic or light waves, such as those generated during radio-wave and infra-red data communications.

Common forms of computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, an EPROM, a FLASH-EPROM, a flash drive, a memory card, any other memory chip or cartridge, a carrier wave as described hereinafter, or any other medium from which a computer can read.

Various forms of computer readable media may be involved in carrying one or more sequences of one or more instructions to processor 2305 for execution. For example, the instructions may initially be carried on a magnetic disk from a remote computer. Alternatively, a remote computer can load the instructions into its dynamic memory and send the instructions over a telephone line using a modem. A modem local to computer system 2300 can receive the data on the telephone line and use an infra-red transmitter to convert the data to an infra-red signal. An infra-red detector can receive the data carried in the infra-red signal and appropriate circuitry can place the data on the data bus 2304. The bus 2304 carries the data to the volatile storage 2306, from which processor 2305 retrieves and executes the instructions. The instructions received by the volatile memory 2306 may optionally be stored on persistent storage device 2308 either before or after execution by processor 2305. The instructions may also be downloaded into the computer platform 2301 via Internet using a variety of network data communication protocols well known in the art.

The computer platform 2301 also includes a communication interface, such as network interface card 2313 coupled to the data bus 2304. Communication interface 2313 provides a two-way data communication coupling to a network link 2314 that is coupled to a local network 2315. For example, communication interface 2313 may be an integrated services digital network (ISDN) card or a modem to provide a data communication connection to a corresponding type of telephone line. As another example, communication interface 2313 may be a local area network interface card (LAN NIC) to provide a data communication connection to a compatible LAN. Wireless links, such as well-known 802.11a, 802.11b, 802.11g and Bluetooth may also used for network implementation. In any such implementation, communication interface 2313 sends and receives electrical, electromagnetic or optical signals that carry digital data streams representing various types of information.

Network link 2313 typically provides data communication through one or more networks to other network resources. For example, network link 2314 may provide a connection through local network 2315 to a host computer 2316, or a network storage/server 2317. Additionally or alternatively, the network link 2313 may connect through gateway/firewall 2317 to the wide-area or global network 2318, such as an Internet. Thus, the computer platform 2301 can access network resources located anywhere on the Internet 2318, such as a remote network storage/server 2319. On the other hand, the computer platform 2301 may also be accessed by clients located anywhere on the local area network 2315 and/or the Internet 2318. The network clients 2320 and 2321 may themselves be implemented based on the computer platform similar to the platform 2301.

Local network 2315 and the Internet 2318 both use electrical, electromagnetic or optical signals that carry digital data streams. The signals through the various networks and the signals on network link 2314 and through communication interface 2313, which carry the digital data to and from computer platform 2301, are exemplary forms of carrier waves transporting the information.

Computer platform 2301 can send messages and receive data, including program code, through the variety of network(s) including Internet 2318 and LAN 2315, network link 2314 and communication interface 2313. In the Internet example, when the system 2301 acts as a network server, it might transmit a requested code or data for an application program running on client(s) 2320 and/or 2321 through Internet 2318, gateway/firewall 2317, local area network 2315 and communication interface 2313. Similarly, it may receive code from other network resources.

The received code may be executed by processor 2305 as it is received, and/or stored in persistent or volatile storage devices 2308 and 2306, respectively, or other non-volatile storage for later execution. In this manner, computer system 2301 may obtain application code in the form of a carrier wave.

It should be noted that the present invention is not limited to any specific firewall system. The inventive policy-based content processing system may be used in any of the three firewall operating modes and specifically NAT, routed and transparent.

Finally, it should be understood that processes and techniques described herein are not inherently related to any particular apparatus and may be implemented by any suitable combination of components. Further, various types of general purpose devices may be used in accordance with the teachings described herein. It may also prove advantageous to construct specialized apparatus to perform the method steps described herein. The present invention has been described in relation to particular examples, which are intended in all respects to be illustrative rather than restrictive. Those skilled in the art will appreciate that many different combinations of hardware, software, and firmware will be suitable for practicing the present invention. For example, the described software may be implemented in a wide variety of programming or scripting languages, such as Assembler, C/C++, perl, shell, PHP, Java, etc.

Moreover, other implementations of the invention will be apparent to those skilled in the art from consideration of the specification and practice of the invention disclosed herein.

Various aspects and/or components of the described embodiments may be used singly or in any combination in the computerized storage system with data integrity verification functionality. It is intended that the specification and examples be considered as exemplary only, with a true scope of the invention being indicated by the following claims.

## Claims

1. A system for managing and verifying integrity of a data object, the system comprising:
an archive storage system comprising a first interface operable to connect the archive storage system with a client computer, the archive storage system comprising an internal storage and a processor, the archive storage system operable to receive the data object from the client computer, to store, at least intermittently, the received data object in the internal storage and to generate and cause to be recorded a first integrity measure for the data object; and
an external storage system operatively coupled to the archive storage system;
wherein the archive storage is operable to:
migrate the data object to the external storage system upon an occurrence of a predetermined condition;
generate, upon reading of the data object by the client computer, a second integrity measure for the data object;
verify the integrity of the data object using the stored first integrity measure and the second integrity measure; and
notify the client computer if it is determined that the integrity of the data object has been compromised.

2. The system of claim 1, wherein verifying comprises comparing the stored first integrity measure with the second integrity measure.

3. The system of claim 1, wherein the generating, verifying and notifying are performed after the data object has been migrated to the external storage system and wherein prior to verifying, the data object is provided from the external storage system to the archive storage system.

4. The system of claim 1, wherein the archive storage system further comprises a memory operable to store management information, the management information comprising a hash algorithm identification information: and
wherein the system further comprises a management server coupled to the archive storage system and operable to manage the management information and to cause at least one of the first integrity measure and the second integrity measure to be updated.

5. The system of claim 1, wherein the archive storage system comprises an external storage system interface operable to connect the external storage system and wherein the external storage system comprises at least one of a network attached storage, an optical disk storage, and a tape system.

6. The system of claim 1, wherein the archive storage system further comprises a memory operable to store management information, the management information comprising:
a verification table providing a verification indicator for the external storage system;
a migration table for defining the external storage system to which the data object migrates from the archive storage system; and
an object table including a storage location and a creation of time of the data object, the storage location including an internal storage location on the archive storage system or an external storage location on the external storage system.

7. The system of claim 6,
wherein the verification indicator is a verification level indicating actions to be performed when the integrity verification is conducted for the data object being read from the external storage system into the archive storage system,
wherein the fist data integrity measure includes a signature being calculated as an encrypted hash value of the data object and a storage certificate comprising a decryption key, the signature and the storage certificate being migrated to the external storage device together with the data object, and
wherein the object table further comprises the storage certificate expiration time.

8. The system of claim 1, wherein the first integrity measure comprises a hash value of the data object signed with a storage system key; wherein the second integrity measure comprises a hash value of the data object at a time when the data object is read from the external storage system and wherein verifying comprises decrypting the signed hash value of the data object using a decryption key from a storage certificate and comparing the decrypted hash value of the data object with the second integrity measure.

9. A method for managing a data object stored in a storage system comprising an archive storage system including a first interface operable to connect the archive storage system with a client computer and an external storage system operatively coupled to the archive storage system, the method comprising:
generating and storing, upon receipt of the data object by the storage system from the client computer, a first integrity measure for the data object;
migrating the data object to the external storage system upon an occurrence of a predetermined condition;
generating, upon reading of the data object by the client computer, a second integrity measure for the data object;
verifying the integrity of the data object using the stored first integrity measure and the second integrity measure; and
notifying the client computer if it is determined that the integrity of the data object has been compromised.

10. The method of claim 9, wherein the first integrity measure is a first cryptographic hash value and the second integrity measure is a second cryptographic hash value.

11. The method of claim 9, wherein verifying comprises comparing the stored first integrity measure with the second integrity measure.

12. The method of claim 9, wherein the generating, verifying and notifying are performed after the data object has been migrated to the external storage system and wherein prior to verifying, the data object is provided from the external storage system to the archive storage system.

13. The method of claim 9, wherein the first integrity measure comprises a first hash value of the data object signed with a storage system key; wherein the second integrity measure comprises a second hash value of the data object at a time when the data object is read from the external storage system and
wherein verifying comprises decrypting the signed first hash value of the data object using a decryption key from a storage certificate corresponding to the storage system key and comparing the decrypted first hash value of the data object with the second hash value.

14. The method of claim 13, further comprising:
comparing a difference between a current time and the creation time with the migration time; and
if the difference exceeds the migration time, then:
calculating a first hash value for the data object;
encrypting the first hash value using the storage system key stored on the archive storage to obtain a signed first hash value;
recording an expiration time of the storage certificate corresponding to the storage system key on the archive storage;
migrating the data object, the signed first hash value and the storage certificate to the external storage system; and
recording a path to the external storage system on the archive storage.

15. A computer readable medium storing a set of instructions, which, when executed by one or more processors, cause the one or more processors to perform a method of any of the claims 9 to 14 for managing a data object stored in a storage system comprising an archive storage system including a first interface operable to connect the archive storage system with a client computer and an external storage system operatively coupled to the archive storage system.
